# EUROPÄISCHE PATENTANMELDUNG

(11) **EP 4 686 698 A1**
(43) Veröffentlichungstag der Anmeldung: **04.02.2026**
(21) Anmeldenummer: 24020319.0
(22) Anmeldetag: 17.10.2024
(51) Int. Cl.: C01B 3/34, C01B 3/38, C01B 3/50, C01B 3/56

(54) **VERFAHREN UND ANLAGE ZUR HERSTELLUNG EINES VERFAHRENSPRODUKTS SOWIE VERFAHREN ZUR UMRÜSTUNG EINER DERARTIGEN ANLAGE**

(30) Priorität: 29.07.2024 EP 24020247
(71) Anmelder: Linde GmbH, 82049 Pullach (DE)
(72) Erfinder: Behrens, Axel, 82049 Pullach (DE); Ettner, Florian, 82049 Pullach (DE); Helfenbein, Sebastian, 82049 Pullach (DE); Krebs, Benjamin, 82049 Pullach (DE); Müller-Thorwart, Ole, 82049 Pullach (DE)
(74) Vertreter: Fischer, Werner

(57) **Zusammenfassung**

Ein Verfahren (100,) zur Bereitstellung eines Verfahrensprodukts (21) wird vorgeschlagen, wobei das Verfahren (100,) das Bearbeiten eines kohlenstoffhaltigen Einsatzes (1) in einer Bearbeitungssequenz (110, 120, 130, 140, 150) unter Erhalt eines Kohlendioxid enthaltenden ersten Komponentengemisches (17), und das Abtrennen (160) zumindest eines Teils des Kohlendioxids aus dem ersten Komponentengemisch (17) oder einem Teil hiervon unter Erhalt eines das Verfahrensprodukt enthaltenden zweiten Komponentengemisches (20) umfasst, wobei die Bearbeitungssequenz (110, 120, 130, 140, 150) einen feuerungsbeheizten Umsetzungsschritt (120) und einen parallel dazu durchgeführten elektrisch beheizten Umsetzungsschritt (130) umfasst. Eine entsprechende Anlage wird ebenfalls vorgeschlagen.

## Beschreibung

### Gebiet

Die vorliegende Offenbarung betrifft die Herstellung eines Verfahrensprodukts.

### Hintergrund

Bei der industriellen Herstellung von Wasserstoff aus kohlenstoffhaltigen Einsatzstoffen mittels Dampfreformierung, aber auch bei anderen Verfahren zur Herstellung von Verfahrensprodukten, bei denen ein Brennstoff zur Beheizung von Reaktoren verfeuert wird, besteht der Wunsch nach einer Dekarbonisierung.

Ein aktueller Ansatz hierfür beruht beispielsweise auf der Entfernung von Kohlendioxid aus einem bei der Verfeuerung des Brennstoffs anfallenden Rauchgas, insbesondere mittels Aminwäsche. Auf diese Weise können typischerweise mehr als ca. 95% des im Brennstoff befindlichen Kohlenstoffs als Kohlendioxid entfernt werden. Dieses Verfahren ist allerdings aufgrund des niedrigen Partialdrucks von Kohlendioxid im Rauchgas apparativ aufwändig und durch die für die Regenerierung des Amins erforderliche Energie auch im Betrieb kostspielig. Daher ist der Einsatz in der Praxis bisher begrenzt.

Wesentlich einfacher kann das im jeweiligen Prozess entstehende Kohlendioxid aus einem entsprechenden Prozessgas, bei der Dampfreformierung also einem Synthesegas, abgetrennt werden. In diesem Fall handelt es sich also nicht durch die Verbrennung des Brennstoffs, sondern durch die Umsetzung eines Einsatzes in der jeweiligen Reaktion gebildetes Kohlendioxid. Dies kann insbesondere unter hohem Druck erfolgen. Hierdurch ergeben sich allerdings nur Abtrennraten von Kohlenstoff von insgesamt, d.h. bezogen auf Prozess- und Heizgas, ca. 60%, wenn die aufwendige Abtrennung von Kohlendioxid aus dem Rauchgas nicht durchgeführt wird.

Vor diesem Hintergrund besteht der Bedarf nach verbesserten Ansätzen zur Herstellung von Verfahrensprodukten.

### Übersicht

Vor diesem Hintergrund werden Verfahren und eine Anlage zur Herstellung eines Verfahrensprodukts sowie ein Verfahren zum Umrüsten einer Anlage zur Herstellung eines Verfahrensprodukts mit den Merkmalen der unabhängigen Patentansprüche vorgeschlagen. Ausgestaltungen sind Gegenstand der abhängigen Patentansprüche und der nachfolgenden Beschreibung.

Das vorgeschlagene Verfahren zur Herstellung eines Verfahrensprodukts umfasst das Bearbeiten eines kohlenstoffhaltigen Einsatzes, insbesondere mit Dampf, in einer Bearbeitungssequenz unter Erhalt eines Kohlendioxid enthaltenden ersten Komponentengemisches, und das Abtrennen zumindest eines Teils des Kohlendioxids aus dem ersten Komponentengemisch oder einem Teil hiervon unter Erhalt eines das Verfahrensprodukt enthaltenden zweiten Komponentengemisches. Die Bearbeitungssequenz umfasst in dem vorgeschlagenen Verfahren einen feuerungsbeheizten Umsetzungsschritt und einen parallel dazu durchgeführten elektrisch beheizten Umsetzungsschritt.

Unter "parallel" sei hier insbesondere eine zeitgleiche Durchführung in unterschiedlichen Prozesseinheiten verstanden, deren Einsatz aus einer gemeinsamen Quelle, beispielsweise einem Ausgangsstoffstrom, stammt, und stromauf der Prozesseinheiten auf die Prozesseinheiten aufgeteilt wird, wobei die Produktgemische aus den Prozesseinheiten teilweise oder vollständig stromab der Prozesseinheiten zu einem gemeinsamen Produkt- oder Prozessgasstrom vereinigt werden.

Durch den Einsatz des vorgeschlagenen Verfahrens und seiner Ausgestaltungen lässt sich das Kohlendioxid im Prozessgas in weit überwiegendem Umfang rückgewinnen. Die auf das gesamte Prozess- und Heizgas bezogenen erreichbaren Abtrennraten von Kohlendioxid steigen von herkömmlicherweise ca. 60% in Ausgestaltungen der Erfindung auf deutlich höhere Werte, beispielsweise auf ca. 80%.

In Ausgestaltungen des vorgeschlagenen Verfahrens ist das Verfahrensprodukt Wasserstoff, das erste Komponentengemisch enthält Wasserstoff, und der elektrisch beheizte Umsetzungsschritt und der feuerungsbeheizte Umsetzungsschritt sind Reformierungsschritte, insbesondere Dampfreformierungsschritte. Das erste Komponentengemisch ist daher insbesondere ein Synthesegas bekannter Art. Entsprechende Ausgestaltungen eignen sich insbesondere zur Umrüstung existierender Verfahren bzw. Anlagen, wie ebenfalls unten noch erläutert. Wie ebenfalls bereits erwähnt, sind das vorgeschlagene Verfahren und seine Ausgestaltungen jedoch nicht auf die Herstellung von Wasserstoff beschränkt, sondern können auch im Zusammenhang mit der Herstellung anderer Verfahrensprodukte zum Einsatz kommen.

Der Begriff "Synthesegas" soll insbesondere ein Wasserstoff und Kohlenmonoxid enthaltendes Gasgemisch bezeichnen, wobei der Gehalt an Wasserstoff und Kohlenmonoxid in Summe insbesondere mehr als 50% auf molarer Basis beträgt. Auch Kohlendioxid kann enthalten sein, wobei ein Gehalt an Wasserstoff, Kohlenmonoxid und Kohlendioxid durch eine Wassergaskonvertierung in bekannter Weise beeinflusst werden kann.

Im Rahmen des vorgeschlagenen Verfahrens wird beispielsweise ein Teilstrom des kohlenstoffhaltigen Einsatzes oder eines hieraus gebildeten Stoffstroms vor einem konventionellen Dampfreformer, oder allgemeiner einem feuerungsbeheizten Umsetzungsschritt, abgezweigt, und zu dem nun zusätzlich bereitgestellten elektrischen Dampfreformer, oder allgemeiner einem elektrisch beheizten Umsetzungsschritt, geführt.

Das Verhältnis der Beschickung des feuerungsbeheizten Umsetzungsschritts und des elektrisch beheizten Umsetzungsschritts kann in hier vorgeschlagenen Ausgestaltungen, insbesondere im Fall einer Umrüstung einer bestehenden Anlage, abhängig von Verfahrensparametern einer bestehenden oder einer geplanten Anlage und dem zu erreichenden Optimierungsziel eingestellt oder vorgegeben werden. Beispielsweise handelt es sich hierbei im Fall eines Dampfreformers bei solchen Verfahrensparametern um eine Reformertemperatur, ein Verhältnis von Dampf zu Kohlenstoff, und eine Feuerungsleistung. Auch eine Abtrennrate für Kohlendioxid kann als Grundlage einer entsprechenden Einstellung oder Vorgabe dienen.

Stromab des feuerungsbeheizten Umsetzungsschritts und des elektrisch beheizten Umsetzungsschritts, können die in den beiden Umsetzungsschritten gebildeten Gasgemische optional wieder zusammengeführt werden, um möglichst viele Anlagenteile gemeinsam und, beispielsweise einer existierenden Anlage im Falle einer Umrüstung, weiter zu nutzen.

In Ausgestaltungen des vorgeschlagenen Verfahrens ist vorgesehen, dass die Bearbeitungssequenz einen oder mehrere Einsatzaufbereitungsschritte stromauf des elektrisch beheizten Umsetzungsschritts und des feuerungsbeheizten Umsetzungsschritts und/oder einen oder mehrere Wassergaskonvertierungsschritte stromab des elektrisch beheizten Umsetzungsschritts und des feuerungsbeheizten Umsetzungsschritts umfasst. Die Wassergaskonvertierung, auch als Wassergasshift bezeichnet, ist bekannt und dient im Fall der Dampfreformierung zur Umsetzung von Kohlenmonoxid mit Wasserdampf zu weiterem Wasserstoff. Hierbei kann eine Hoch-, Mittel- und/oder Niedertemperaturkonvertierung zum Einsatz kommen. In Ausgestaltungen des vorgeschlagenen Verfahrens kann beispielsweise auch eine Mittel- und/oder Niedertemperaturkonvertierung nachgerüstet werden.

Falls in einer existierenden Anlage zur Herstellung von Wasserstoff, bei der der feuerungsbeheizte Umsetzungsschritt und der elektrisch beheizte Umsetzungsschritt Dampfreformierungsschritte sind, beispielsweise nur eine Prozesseinheit zur Durchführung einer Hochtemperatur-Wassergaskonvertierung vorgesehen sein sollte, durch Einbringung von Prozesseinheiten zur Durchführung einer Mittel- und/oder Niedertemperatur-Wassergaskonvertierung die Ausbeute von Wasserstoff und gleichzeitig die Abtrennrate von Kohlendioxid erhöht werden. Der Grund hierfür ist, dass in solchen Ausgestaltungen mehr Kohlenmonoxid mit dem im Prozessgas, hier einem Synthesegas, enthaltenen Wasserdampf in Wasserstoff und Kohlendioxid umgewandelt wird.

In Ausgestaltungen des vorgeschlagenen Verfahrens erfolgt das Abtrennen zumindest eines Teils des Kohlendioxids aus dem ersten Komponentengemisch auf einem Druck in einem Bereich von 10 bis 40 bar, 20 bis 30 bar oder 15 bis 35 bar. In einem derartigen Druckbereich ist die Kohlendioxidentfernung besonders effizient durchführbar, insbesondere im Vergleich zu einer Entfernung aus einem im Wesentlichen drucklosen Rauchgas.

In den hier vorgeschlagenen Ausgestaltungen kann ungeachtet der spezifischen Abtrennbedingungen das Kohlendioxid aus dem Prozessgas, das hier allgemein als erstes Gasgemisch bezeichnet wird, oder einem hieraus gebildeten Stoffstrom, nahezu vollständig entfernt werden, wozu beispielsweise etablierte Verfahren, wie z.B. eine Aminwäsche oder adsorptive oder kryogene Verfahren zum Einsatz kommen können. Das abgetrennte Kohlendioxid kann weiter verdichtet und aufgereinigt werden, je nach erforderlicher Qualität zur Weiterverwendung oder Einlagerung.

Das nahezu kohlendioxidfreie Prozessgas, hier allgemeiner als zweites Gasgemisch bezeichnet, das im Falle einer Dampfreformierung mit entsprechend weitgehender Wassergaskonvertierung nun größtenteils aus Wasserstoff als Verfahrensprodukt besteht und deshalb auch als Rohwasserstoff bezeichnet wird, kann also im Rahmen des vorgeschlagenen Verfahrens und seiner Ausgestaltungen weiter aufgereinigt werden, beispielsweise mittels Druckwechseladsorption, und anschließend als Produkt abgegeben werden.

In Ausgestaltungen des vorgeschlagenen Verfahrens ist vorgesehen, dass ein bei der Produktaufbereitung verbleibendes Restgemisch oder ein Teil hiervon und/oder ein Teil des zweiten Komponentengemisches zum Befeuern des feuerungsbeheizten Umsetzungsschritts verwendet wird. Bei beiden Gasgemischen handelt es sich aufgrund der stromauf erfolgten Umsetzung von Kohlenwasserstoffen, im Falle des Einsatzes einer Wassergaskonvertierung der Umsetzung von Kohlenmonoxid zu Kohlendioxid, und der Abtrennung von Kohlendioxid, um eher kohlenstoffarme Brennstoffe bzw. Brennstoffe, die wenig oder kein zusätzliches Kohlendioxid in die Verbrennung einbringen.

Ein Teil des nahezu kohlendioxidfreien Prozessgases, also insbesondere des zweiten Gasgemisches, kann, mit anderen Worten, falls geeignet, als kohlenstoffarmer Brennstoff dem feuerungsbeheizten Umsetzungsschritt zugeführt werden und kann den dort üblicherweise, bei einer Umrüstung auch vor der Umrüstung, eingesetzten, kohlenstoffreichen Brennstoff wie Erdgas teilweise oder vollständig ersetzen.

Die vorgeschlagene Anlage zur Bereitstellung eines Verfahrensprodukts weist Prozesseinheiten auf, die zum Bearbeiten eines kohlenstoffhaltigen Einsatzes in einer Bearbeitungssequenz unter Erhalt eines Kohlendioxid enthaltenden ersten Komponentengemisches und zum Abtrennen zumindest eines Teils des Kohlendioxids aus dem ersten Komponentengemisch oder einem Teil hiervon unter Erhalt eines das Verfahrensprodukt enthaltenden zweiten Komponentengemisches eingerichtet sind, wobei die Prozesseinheiten eine feuerungsbeheizte Prozesseinheit umfassen, die dazu eingerichtet ist, in der Bearbeitungssequenz einen feuerungsbeheizten Umsetzungsschritt durchzuführen, und eine parallel hierzu angeordnete elektrisch beheizte Prozesseinheit, die dafür eingerichtet ist, in der Bearbeitungssequenz einen elektrisch beheizten Umsetzungsschritt durchzuführen.

Vorteile und Merkmale, die bezüglich des vorgeschlagenen Verfahrens und seinen Ausgestaltungen beschrieben wurden, gelten auch für die vorgeschlagene Anlage und umgekehrt. Diese werden entsprechend nur einmalig beschrieben, und auf die jeweiligen Erläuterungen kann verwiesen werden.

Entsprechendes gilt auch für eine Anlage, die dazu eingerichtet sein kann, ein Verfahren gemäß einer beliebigen Ausgestaltung durchzuführen, sowie das vorgeschlagene Verfahren zur Umrüstung einer entsprechenden Anlage.

Letzteres umfasst das Bereitstellen einer Anlage, die vor der Umrüstung Prozesseinheiten aufweist, die zum Bearbeiten eines kohlenstoffhaltigen Einsatzes in einer Bearbeitungssequenz unter Erhalt eines Kohlendioxid enthaltenden ersten Komponentengemisches eingerichtet sind, wobei die Prozesseinheiten eine feuerungsbeheizte Prozesseinheit umfassen, die dazu eingerichtet ist, in der Bearbeitungssequenz einen feuerungsbeheizten Umsetzungsschritt durchzuführen, und keine parallel hierzu angeordnete elektrisch beheizte Prozesseinheit, die dafür eingerichtet ist, in der Barbeitungssequenz einen elektrisch beheizten Umsetzungsschritt durchzuführen, wobei das Umrüsten umfasst, die elektrisch beheizte Prozesseinheit bereitzustellen. Das Umrüsten kann ferner das Bereitstellen einer oder mehrerer Prozesseinheiten umfassen, die vorher nicht vorhanden und nach der Umrüstung zum Abtrennen zumindest eines Teils des Kohlendioxids aus dem ersten Komponentengemisch oder einem Teil hiervon unter Erhalt eines das Verfahrensprodukt enthaltenden zweiten Komponentengemisches eingerichtet sind. Das vorgeschlagene Verfahren zur Umrüstung einer entsprechenden Anlage umfasst also eine Anlage, die zur Durchführung des feuerungsbeheizten Umsetzungsschritts eingerichtet und zur Durchführung des elektrisch beheizten Umsetzungsschritts nicht eingerichtet ist, zur Durchführung des elektrisch beheizten Umsetzungsschritts zu ertüchtigen.

Besondere Vorteile einer derartigen Umrüstung bestehen, wie unten erläutert, darin, dass keine nennenswerten Eingriffe in die vorhandenen Anlagenkomponenten, beispielsweise eines befeuerten Dampfreformers, notwendig sind und daher die Umrüstung besonders einfach und kostengünstig durchführbar ist.

In bestimmten Ausgestaltungen kann die Umrüstung auch eine Bereitstellung eines Mittel- und/oder Niedertemperaturkonvertierungsschritts umfassen. Hierdurch kann die Abtrennrate von Kohlenstoff als Kohlendioxid aus dem Prozessgas deutlich erhöht werden.

### Zeichnungen

Im Rahmen der vorliegenden Offenbarung vorgeschlagene Aspekte werden anhand der beiliegenden Zeichnung näher erläutert. Dabei zeigt

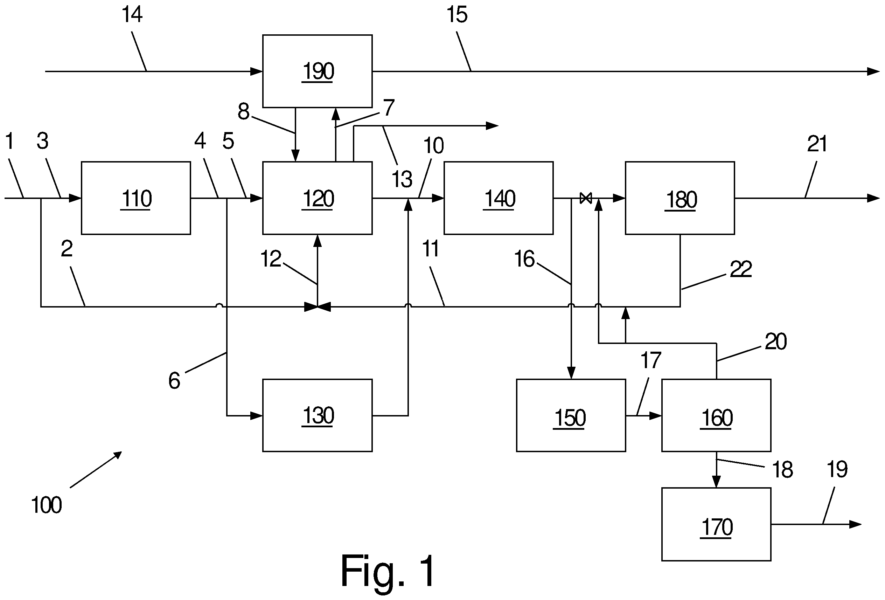

Figur 1 eine Ausgestaltung eines vorgeschlagenen Verfahrens.

### Ausführungsformen

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Funktionen, Merkmale, Strukturen und/oder andere Aspekte nicht als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus diesen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende in ihrer Funktion einander entsprechende, baulich identische oder vergleichbar aufgebaute Elemente, Verfahrensschritte usw. können mit identischen Bezugszeichen angegeben sein.

Die nachfolgenden Erläuterungen und Definitionen, die einige Grundlagen der Erfindung betreffen, können für alle oder einen Teil der hier vorgestellten Ausgestaltungen gelten, und die Erläuterung bestimmter Aspekte im Zusammenhang mit nur einem Teil oder einer der Ausgestaltungen soll nicht dahingehend verstanden werden, dass diese Aspekte nicht auch mit anderen oder allen Ausgestaltungen, soweit technisch möglich und sinnvoll, verwirklicht sein können.

Sämtliche hier verwendete Prozentangaben können sich auf Mol-, Mengen- oder Volumenanteile beziehen. Druckangaben in bar sind, soweit nicht anders erläutert, insbesondere als Absolutdrücke zu verstehen.

Die Konjunktion "und/oder" soll, wenn in einer Aufzählung vor dem letzten Element der Aufzählung verwendet, so verstanden werden, dass alle in der Aufzählung zuvor genannten Begriffe in beliebiger Weise miteinander kombiniert werden können. Mit anderen Worten ist mit "A, B und/oder C" "A und/oder B und/oder C" oder "wenigstens eines der Elemente A, B, C in beliebiger Kombination" gemeint.

Die Wasserstoffherstellung im industriellen Maßstab basiert hauptsächlich auf Kohlenwasserstoffen und umfasst beispielsweise die Dampfreformierung von Erdgas. Anstelle einer Erläuterung des bereits Bekannten wird auf einschlägige Fachliteratur wie die Artikel "Gas Production, 2. Processes" und "Hydrogen, 2. Production" in Ullmann's Encyclopedia of Industrial Chemistry (2012) verwiesen.

Die Wasserstoffherstellung stellt indes nur einen Anwendungsbereich der vorliegenden Erfindung dar. Das hier vorgeschlagene Verfahren und seine Ausgestaltungen eignen sich in gleicher Weise für andere endotherme verfahrenstechnische Prozesse oder endotherme Verfahrensschritte in solchen Prozessen, beispielsweise zur Herstellung von bestimmten Edukten oder Zwischenprodukten. Beispiele sind Prozesse zur Herstellung von Kohlenmonoxid oder zur kombinierten Herstellung von Wasserstoff und Kohlenmonoxid, Prozesse zur Herstellung von Ammoniak, Prozesse zur Herstellung von Methanol, Prozesse zur Dehydrierung von Alkanen wie Propan oder Butan zu Alkenen oder Dialkenen wie Propylen oder Butadien, Prozesse zur Dehydrierung von Ethylbenzol zu Styrol, Prozesse zur reversen Wassergaskonvertierung und Prozesse zur thermischen Spaltung von Ammoniak.

Nachfolgend wird insbesondere die Wasserstoffherstellung erläutert, wobei die entsprechenden Erläuterungen aber auch für die anderen erläuterten Prozesse bzw. endotherme Schritte in diesen Prozessen gleichermaßen gelten. Ist daher nachfolgend von einem "Umsetzungsschritt" die Rede, kann es sich hierbei um einen (Dampf-) Reformierungsschritt handeln und umgekehrt. Entsprechendes gilt für die jeweiligen Apparate bzw. Anlagenteile.

Die durch Bereitstellung einer Kohlendioxidabtrennung im Synthesegasweg von Wasserstoffanlagen erreichbare Abtrennrate von Kohlendioxid von ca. 60% (bezogen auf den gesamten Kohlenstoff, der im Einsatzgas und Brennstoff enthalten ist), wird in der Regel als nicht ausreichend angesehen, während eine zusätzliche Kohlendioxidabtrennung aus dem Rauchgas als unverhältnismäßig aufwendig betrachtet wird. Auch dies gilt für andere Verfahrensprodukte in ähnlicher Weise.

Das vorgeschlagene Verfahren ermöglicht dagegen mit vertretbarem Aufwand eine Abtrennrate von Kohlendioxid von deutlich über 60%, beispielsweise ca. 80%, auch wenn nur eine energetisch effiziente Kohlendioxidabtrennung aus dem Synthesegas oder allgemeiner einem ersten Komponentengemisch, installiert wird. Dies ist deshalb der Fall, weil eine Befeuerung des feuerungsbeheizten Umsetzungsschritts durch die zusätzliche Bereitstellung des elektrisch beheizten Umsetzungsschritts teilweise oder vollständig mit in dem Verfahren erzeugten, wasserstoffreichen Gasen oder Gasgemischen wie dem zweiten Gasgemisch möglich ist.

In dem vorgeschlagenen Verfahren wird beispielsweise eine konventionelle Anlage zur Herstellung eines Verfahrensprodukts, beispielsweise von Wasserstoff auf Grundlage einer Dampfreformierung, so modifiziert, dass durch eine Kohlendioxidabtrennung aus einem Produktgemisch, im Beispiel Synthesegas, bei hohem Druck die Abtrennrate von Kohlendioxid wesentlich gesteigert wird. Dies wird durch die Bereitstellung des elektrisch beheizten Umsetzungsschritts, im Beispiel eines elektrisch beheizten Dampfreformierungsschritts, erzielt. Dieser wird beispielsweise im Zuge einer Umrüstung bereitgestellt und parallel zu einem befeuerten Umsetzungsschritt, im Beispiel einem befeuerten Dampfreformierungsschritt, betrieben. Der Bedarf an externem Heizgas für den befeuerten Umsetzungsschritt kann durch geeignete Verfahrensführung bis auf null gesenkt werden.

Durch die Parallelschaltung eines elektrisch beheizten Umsetzungsschritts zum befeuerten Umsetzungsschritt besteht die Möglichkeit, die Produktkapazität der Anlage zu steigern und/oder die Menge an Brennstoff gegenüber der konventionellen Anlage bei gleicher Produktion des Verfahrensprodukts zu verringern. Durch den Betrieb des elektrisch beheizten Umsetzungsschritts mit "grünem", d.h. unter Verwendung regenerativer Energiequellen erzeugtem, Strom und/oder den durch die Verlagerung des Wärmebedarfs auf den elektrischen Umsetzungsschritt verringerten Wärmebedarf des befeuerten Umsetzungsschritts sinken die spezifischen Emissionen des Verfahrens bezogen auf das gesamte Verfahrensprodukt.

Das vorgeschlagene Verfahren und seine Ausgestaltungen können insbesondere für die Dekarbonisierung existierender Anlagen durch Umrüstung eines elektrisch betriebenen Zusatzreformers verwendet werden, der den kohlenstoffhaltigen Brennstoffanteil im Reformer reduziert und dadurch die über das Rauchgas emittierte Menge an Kohlendioxid minimiert. Es ist kein Eingriff in einen bestehenden Dampfreformer erforderlich und die Umrüstung kann insbesondere kompakt ausgeführt werden. Es ergibt sich eine Kapazitätserhöhung bestehender Anlagen durch Elektrifizierung ohne zusätzliche Erhöhung des Erdgasbedarfs.

Das Verfahren ermöglicht ferner eine Reduktion der Dampfexportmenge und damit des Wasserbedarfs bestehender Anlagen. Durch fortschreitende Elektrifizierung der Industrie verliert Dampf als Energieträger in Zukunft voraussichtlich an Wert. Eine Erhöhung der Anlagenflexibilität durch schnelles An- und Abfahren des elektrisch beheizten Umsetzungsschritts ist möglich, und damit eine Lastanpassung gemäß Strom- bzw. Erdgaspreis und -verfügbarkeit. Auch eine am Stromnetz orientierte Abnahme Leistungsabnahme ist möglich, um einen Überschuss im Stromnetz auszugleichen. Ein Weiterbetrieb der Anlage ist auch bei Ausfall des elektrisch beheizten Umsetzungsschritts möglich. Das Risiko der Einbindung einer neuen Technologie ist damit weitgehend minimiert.

Die üblicherweise durch Kohlendioxidentfernung aus dem Synthesegas erreichbaren Abtrennraten von Kohlendioxid steigen mit dem parallel geschalteten elektrisch beheiztem Umsetzungsschritt in beträchtlichem Umfang, wie oben erläutert.

Weitere mögliche Ausgestaltungen umfassen eine geeignete Aufteilung des Einsatzstoffs, nachfolgend auch "Roheinsatz" genannt, zwischen konventionellem, befeuertem und elektrischem Umsetzungsschritt, wodurch der Bedarf an Primärheizgas (z.B. Erdgas) deutlich (auch bis auf null) gesenkt werden und gleichzeitig ohne Vergrößerung des konventionellen, befeuerten Umsetzungsschritts bei gleichbleibender Produktmenge Einsatzstoff eingespart werden kann.

Durch zusätzliche (teilweise) Verdichtung des Restgases aus einer Produktaufbereitung, die insbesondere unter Verwendung einer Druckwechseladsorption realisiert sein kann, und Rückführung in den Prozess sind auch Abtrennraten von Kohlenstoff von über 90% (z.B. 95%) realisierbar. Falls eine geringere Abtrennrate von Kohlenstoff akzeptabel ist, könnte das Verfahren auch ohne Umrüstung einer Niedertemperaturkonvertierung realisiert werden.

In Figur 1 ist ein Verfahren zur Herstellung eines Verfahrensprodukts, hier eines Wasserstoffprodukts, in Form eines vereinfachten Verfahrensdiagramms schematisch veranschaulicht und insgesamt mit 100 bezeichnet.

Dem Verfahren wird in dem dargestellten Beispiel ein kohlenstoffhaltiger Roheinsatz 1, beispielsweise Erdgas, zugeführt von welchem ein Anteil 2 als Brennstoff abgezweigt wird. Der Rest 3 wird einer Einsatzvorbehandlung 110 unterworfen, die beispielsweise eine Entsäuerung und/oder eine Entschwefelung umfassen kann.

Ein entsprechend aufbereiteter Einsatz 4 wird zu einem Teil 5 einer feuerungsbeheizten Dampfreformierung, d.h. einem feuerungsbeheizten Umsetzungsschritt 120, unterworfen, in dem zusätzlich Dampf 8 aus einem Dampfsystem 190 verwendet wird. Der Dampf kann abweichend zu der Darstellung in Figur 1 auch stromauf des feuerungsbeheizten Umsetzungsschritts 120 dem Teil 5 des aufbereiteten Einsatzes 4 oder dem aufbereiteten Einsatz 4 insgesamt zugemischt werden. Ein weiterer Teil 6 des aufbereiteten Einsatzes 4 sowie bei Bedarf zusätzlicher Dampf wird einer elektrisch beheizten Dampfreformierung, d.h. einem elektrisch beheizten Umsetzungsschritt 130 zugeführt, die bzw. der insbesondere nachgerüstet sein kann bzw. im Zuge einer Umrüstung bereitgestellt wird.

Der feuerungsbeheizte Umsetzungsschritt 120 wird mit Brennstoff 12 betrieben, der den Anteil 2 des Roheinsatzes 1 sowie einen Rückführstrom 11 umfasst, dessen Herkunft unten erläutert wird. In dem feuerungsbeheizten Umsetzungsschritt 120 wird ein Rauchgasstrom 13 gebildet, der aus dem Verfahren aus- bzw. geeigneten Behandlungsschritten zugeführt wird. Dem feuerungsbeheizten Umsetzungsschritt 120 ist das Dampfsystem 190 zugeordnet, dem Kesselspeisewasser 14 zugeführt und unter Umständen Exportdampf 15 entnommen wird. Die Exportdampfmenge kann theoretisch auch Null sein. Dabei werden zur optimalen Wärmeintegration an verschiedenen Stellen im Prozess Wärmeübertrager eingesetzt, die Teilströme von Kesselspeisewasser 8 anwärmen oder in Dampf 7 umwandeln. In Figur 1 ist dies beispielhaft im feuerungsbeheizten Umsetzungsschritt 120 gezeigt. Dasselbe Prinzip kann aber auch in weiteren Prozessschritten, in denen nutzbare Restwärme vorhanden ist bzw. gebildet wird, z.B. der Einsatzvorbehandlung 110, dem elektrisch beheizten Umsetzungsschritt 130 und einer sogleich erläuterten Hochtemperaturkonvertierung 140, angewendet werden.

Nicht gesondert bezeichnete, Wasserstoff, Kohlendioxid und Kohlenmonoxid enthaltende Produktgemische aus dem feuerungsbeheizten Umsetzungsschritt 120 und dem elektrisch beheizten Umsetzungsschritt 130 werden zu einem Sammelstrom 10 vereinigt. Alternativ kann die Zusammenführung auch weiter stromab erfolgen. Dieser wird einer Kühlung und Hochtemperaturkonvertierung 140 unterworfen, wo durch Umsetzung von Kohlenmonoxid und Wasser zusätzlicher Wasserstoff und Kohlendioxid gebildet werden. Ein entsprechend gekühltes und hochtemperaturkonvertiertes Produktgemisch 16 kann zumindest zu einem Teil in eine Niedertemperaturkonvertierung 150 überführt werden, wo durch Umsetzung von Kohlenmonoxid und Wasser nochmals weiterer Wasserstoff und Kohlendioxid gebildet werden können.

Dieses optional niedertemperaturkonvertierte Produktgemisch 17 wird einer Kohlendioxidabtrennung 160 zugeführt, die ebenfalls nachgerüstet sein kann. Das Produktgemisch 17 stellt ein hier ein als "erstes Komponentengemisch" bezeichnetes Komponentengemisch dar. Die zu dessen Bereitstellung verwendeten Schritte 110, 120, 130, 140 und 150, die bereits erläutert wurden, stellen im hier verwendeten Sprachgebrauch eine "Bearbeitungssequenz" dar.

In der Kohlendioxidabtrennung 160 abgetrenntes Kohlendioxid 18 wird in einer Kohlendioxidaufbereitung 170 beispielsweise durch Reinigen und Verdichten zu einem Kohlendioxidprodukt 19 aufbereitet. Ein Wasserstoffrohprodukt bzw. anderes Rohprodukt 20, hier als "zweites Komponentengemisch" bezeichnet, wird in Anteilen in eine Produktaufbereitung 180 eingespeist und optional zu einem Teil zur Bereitstellung des Rückführstroms 11 verwendet. In der Produktaufbereitung 180 wird das Verfahrensprodukt 21, hier Reinwasserstoff, gebildet. Verbleibendes Restgas 22 wird ebenfalls als Teil zur Bereitstellung des Rückführstroms 11 verwendet.

In dem in Figur 1 veranschaulichten Verfahren 100 wird also ein Teil 6 des aufbereiteten Einsatzes 4 nach der Vorbehandlung 110 und vor dem konventionellen, befeuerten Dampfreformierungsschritt 120 abgezweigt und zum elektrisch beheizten Dampfreformierungsschritt 130 geführt. Das Verhältnis hängt beispielsweise von den Verfahrensparametern einer existierenden Anlage und der neuen Anlage (z.B. Reformertemperatur, Dampf-/Kohlenstoff-Verhältnis, Feuerungsleistung) und dem zu erreichenden Optimierungsziel ab.

Anschließend werden die reformierten Gase aus dem feuerungsbeheizten Dampfreformierungsschritt 120 und dem elektrisch beheizten Dampfreformierungsschritt 130 im dargestellten Beispiel wieder zusammengeführt, um möglichst viele Anlagenteile der existierenden Anlage weiter zu nutzen. Je nach Temperaturhöhe, welche sich nach der Zusammenführung der Ströme einstellt, kann optional noch Wasser oder Dampf 8 in den Strom eingebracht werden, um die Temperatur je nach Bedarf einzustellen.

Sollte die existierende Anlage nur über eine Hochtemperaturkonvertierung 140 verfügen, kann durch Einbringung einer Mittel- oder Niedertemperaturkonvertierung die Wasserstoffausbeute und gleichzeitig die Abtrennrate von Kohlendioxid erhöht werden, da dann mehr Kohlenmonoxid mit dem im Synthesegas enthaltenen Wasserdampf in Wasserstoff und Kohlendioxid umgewandelt wird.

Anschließend wird das Kohlendioxid aus dem Synthesegas nahezu vollständig entfernt, durch etablierte Verfahren, wie z.B. eine Aminwäsche oder durch adsorptive oder kryogene Verfahren. Das abgetrennte Kohlendioxid 18 kann weiter verdichtet und aufgereinigt werden, und zwar in dem Schritt 170, je nach erforderlicher Qualität zur Weiterverwendung oder Einlagerung.

Das nahezu kohlendioxidfreie Synthesegas 20, das nun größtenteils aus Wasserstoff besteht (und deshalb auch als Rohwasserstoff bezeichnet wird) wird in der Produktaufbereitung 180 weiter aufgereinigt (z.B. durch Druckwechseladsorption) und dann als Produkt 21 abgegeben. Ein Teil des kohlendioxidfreien Synthesegases 20 kann auch als kohlenstoffarmer Brennstoff dem konventionellen Dampfreformer zugeführt werden und kann den ursprünglich eingesetzten, kohlenstoffreichen Brennstoff (z.B. Erdgas) teilweise oder vollständig ersetzen.

## Patentansprüche

1. Verfahren (100) zur Bereitstellung eines Verfahrensprodukts (21), wobei das Verfahren (100) die folgenden Schritte umfasst:
Bearbeiten eines kohlenstoffhaltigen Einsatzes (1) in einer Bearbeitungssequenz (110, 120, 130, 140, 150) unter Erhalt eines Kohlendioxid enthaltenden ersten Komponentengemisches (17); und
Abtrennen (160) zumindest eines Teils des Kohlendioxids aus dem ersten Komponentengemisch (17) oder einem Teil hiervon unter Erhalt eines das Verfahrensprodukt enthaltenden zweiten Komponentengemisches (20);
wobei die Bearbeitungssequenz (110, 120, 130, 140, 150) einen feuerungsbeheizten Umsetzungsschritt (120) und einen parallel dazu durchgeführten elektrisch beheizten Umsetzungsschritt (130) umfasst.

2. Verfahren (100) nach Anspruch 1,
wobei das Verfahrensprodukt Wasserstoff ist,
wobei das erste Komponentengemisch Wasserstoff enthält, und
wobei der feuerungsbeheizte Umsetzungsschritt (120) und der elektrisch beheizte Umsetzungsschritt (130) Reformierungsschritte sind.

3. Verfahren (100) nach Anspruch 2,
wobei die Bearbeitungssequenz (110, 120, 130, 140, 150) umfasst:
einen oder mehrere Einsatzaufbereitungsschritte (110) stromauf des feuerungsbeheizten Umsetzungsschritts (120) und des elektrisch beheizten Umsetzungsschritts (130); und/oder
einen oder mehrere Wassergaskonvertierungsschritte (140, 150) stromab des elektrisch beheizten Umsetzungsschritts (130) und des feuerungsbeheizten Umsetzungsschritts (120).

4. Verfahren (100) nach einem der vorstehenden Ansprüche,
wobei das Abtrennen (160) zumindest eines Teils des Kohlendioxids auf einem Druck in einem Bereich von 10 bis 40, 15 bis 35 oder 20 bis 30 bar durchgeführt wird.

5. Verfahren (100) nach einem der vorstehenden Ansprüche,
wobei das zweite Komponentengemisch (20) einer Produktaufbereitung (180) unter Erhalt des Verfahrensprodukts (21) unterworfen wird.

6. Verfahren (100) nach einem der vorstehenden Ansprüche,
wobei die Produktaufbereitung (180) unter Verwendung einer Druckwechseladsorption durchgeführt wird.

7. Verfahren (100) nach Anspruch 6,
wobei ein bei der Produktaufbereitung (180) verbleibendes Restgas (22) oder ein Teil hiervon und/oder ein Teil des zweiten Komponentengemisch (20) zum Befeuern des feuerungsbeheizten Umsetzungsschritts (120) verwendet wird.

8. Anlage zur Bereitstellung eines Verfahrensprodukts (21), die Prozesseinheiten aufweist, die zur Durchführung der folgenden Schritten eingerichtet sind:
Bearbeiten eines kohlenstoffhaltigen Einsatzes (1) in einer Bearbeitungssequenz (110, 120, 130, 140, 150) unter Erhalt eines Kohlendioxid enthaltenden ersten Komponentengemisches (17); und
Abtrennen (160) zumindest eines Teils des Kohlendioxids aus dem ersten Komponentengemisch (17) oder einem Teil hiervon unter Erhalt eines das Verfahrensprodukt enthaltenden zweiten Komponentengemisches (20);
wobei die Prozesseinheiten eine feuerungsbeheizte Prozesseinheit, die dazu eingerichtet ist, in der Bearbeitungssequenz (110, 120, 130, 140, 150) einen feuerungsbeheizten Umsetzungsschritt (120) durchzuführen, und eine parallel hierzu angeordnete elektrisch beheizte Prozesseinheit, die dafür eingerichtet ist, in der Berabeitungssequenz (110, 120, 130, 140, 150) einen elektrisch beheizten Umsetzungsschritt (130) durchzuführen, umfassen.

9. Anlage nach Anspruch 8,
wobei die Anlage zur Durchführung eines Verfahrens nach einem der Ansprüche 1 bis 7 eingerichtet ist.

10. Verfahren zur Umrüstung einer Anlage zur Herstellung eines Verfahrensprodukts,
wobei die Anlage vor der Umrüstung Prozesseinheiten aufweist, die zum Bearbeiten eines kohlenstoffhaltigen Einsatzes (1) in einer Bearbeitungssequenz (110, 120 140) unter Erhalt eines Kohlendioxid enthaltenden ersten Komponentengemisches eingerichtet sind,
wobei die Prozesseinheiten vor der Umrüstung eine feuerungsbeheizte Prozesseinheit, die dazu eingerichtet ist, in der Bearbeitungssequenz (110, 120, 130, 140, 150) einen feuerungsbeheizten Umsetzungsschritt (120) durchzuführen, und keine parallel hierzu angeordnete elektrisch beheizte Prozesseinheit, die dafür eingerichtet ist, in der Berabeitungssequenz (110, 120, 130, 140, 150) einen elektrisch beheizten Umsetzungsschritt (130) durchzuführen, umfassen
wobei das Umrüsten umfasst, die elektrisch beheizte Prozesseinheit bereitzustellen, und
wobei das Umrüsten, falls nicht bereits vorhanden, das Bereitstellen einer oder mehrerer Prozesseinheiten umfasst, die nach der Umrüstung zum Abtrennen zumindest eines Teils des Kohlendioxids aus dem ersten Komponentengemisch (17) oder einem Teil hiervon unter Erhalt eines das Verfahrensprodukt enthaltenden zweiten Komponentengemisches (20) eingerichtet sind.

11. Verfahren nach Anspruch 10,
wobei die Umrüstung eine Bereitstellung einer Prozesseinheit umfasst, die zur Durchführung eines Niedertemperaturkonvertierungsschritts eingerichtet ist.
